# EUROPÄISCHE PATENTSCHRIFT

(11) **EP 1 393 306 B1**
(45) Veröffentlichungstag und Bekanntmachung des Hinweises auf die Patenterteilung: **27.10.2004**
(21) Anmeldenummer: 02729908.0
(22) Anmeldetag: 21.05.2002
(51) Int. Cl.: G11B 3/12

(54) **MAGNETISCH STABILISIERTES TONARMSYSTEM MIT EINER FADENAUFHÄNGUNG**
SPRING -SUSPENSION MAGNETICALLY STABILIZED PICK-UP ARM
SYSTEME DE BRAS DE LECTURE A STABILISATION MAGNETIQUE COMPRENANT UNE SUSPENSION A FIL

(30) Priorität: 21.05.2001 DE 10124776
(43) Veröffentlichungstag der Anmeldung: 03.03.2004
(73) Patentinhaber: Schröder, Frank, 10627 Berlin (DE)
(72) Erfinder: Schröder, Frank, 10627 Berlin (DE)
(74) Vertreter: Bergmann, Simon
(86) Internationale Anmeldenummer: PCT/DE2002/001911
(87) Internationale Veröffentlichungsnummer: WO 2002/095736

(56) Entgegenhaltungen:
- DE-A- 2 260 855
- DE-A- 3 002 013
- GB-A- 1 145 865
- US-A- 4 170 360
- W.SCHWEIZER ET AL: "Reibungsarme Tonarmlagerung durch magnetische Entlastung" FEINWERKTECHNIK + MICRONIC., Bd. 76, Nr. 8, Dezember 1972 (1972-12), Seiten 394-395, XP002212299 CARL HANSER VERLAG. MUNCHEN. ., DE

## Beschreibung

Die Erfindung betrifft ein Tonarmsystem zur Schallplattenwiedergabe bestehend aus einem Tonarmchassis und einem Tonarmrohr, wobei eine Torsionselementaufhängung des Tonarmrohrs durch zylindrische, in vertikaler Richtung mit entgegengesetzter Polarität angeordnete Dauermagneten axial stabilisiert wird und ein Drehlager bildet.

Nach dem Stand der Technik werden in herkömmlichen Drehtonarmen zur Lagerung des Tonarmrohrs Schneiden-, Kugel- oder Einpunkt-Spitzen-Lager, bzw. eine Kombination aus denselben verwendet. Nachteilig an diesen Lagerprinzipien ist, dass die in den Lagern auftretende Reibung und damit Störungen der Tonarmbewegung nur bis zu einem systemimmanenten Minimalwert reduziert werden können. Die Störungen sind Folge eines ständig auftretenden Wechsels von Haft- und Gleit/Rollreibung ("Stick-Slip-Effekt") bei der Führung des Tonarmsystems über die Schallplatte und führen zu einer ruckartigen Führung des Tonarmsystems und damit zu störenden Einflüssen bei der Wiedergabe.

Darüber hinaus wirkt sich die starre, mechanische Lager-Ankoppelung des Tonarmrohrs an das sogenannte Laufwerk (Antriebsmotor, Zarge und Plattenteller) negativ auf die ungestörte Abtastung der Rillenmodulation und damit die Wiedergabequalität einer Schallplatte aus. Störende Resonanzen, wie z. B. durch Motorvibrationen oder Luft- und Trittschall angeregt, werden über den Tonarm auf das Tonabnehmersystem übertragen und führen zu einer Veränderung und damit Verfälschung des Originalsignals. Desgleichen werden durch den Abtastvorgang durch das Tonarmrsystem Schwingungen generiert, welche den Tonarm, wie auch das Laufwerk auf welchem dieser montiert ist, zu Resonanzen anregen.

Die bei vielen Tonaarmsystemen verwendete Möglichkeit, die sogenannte Tonarm-Tonabnehmerresonanz (typisch zwischen 7Hz und 14Hz) mittels einer Silikonöldämpfungseinrichtung zu bedämpfen, hat negative Auswirkungen auf die Wiedergabe der hochfrequenten Anteile des Musiksignals (Überdämpfung).

Weiterhin sind hochwertige konventionelle Drehtonarm-Lager stets stoßempfindlich. Die häufig verwendeten Edelsteinlagerpfannen sind sehr spröde und daher bruchanfällig. Entsprechende Edelstein-Spitzen - aber auch Kugellager - weisen nach einer starken Erschütterung oder auch nur unsachgemäßer Behandlung fast immer Beschädigungen der Lagerelemente, also der Spitzen, Pfannen oder der Kugellaufflächen auf. Diese Beschädigungen führen zu einer Erhöhung der Lagerreibung, welche die Wiedergabequalität des Tonarmsystems in höchst nachhaltiger Weise beeinflussen.

Die DE 22 60 855 C2 beschreibt einen Tonarm, der die axial gerichtete Auflagekraft der vertikalen Schwenkachse des Tonarms durch zwei sich abstoßenden Magneten dämpft. Hierdurch wird eine reibungsarme Tonlagerung des Tonarms bei Schwenkbewegungen um die vertikale Achse offenbart.

Die US 4,121,837 beschreibt einen Plattenspieler, dessen Tonarm durch eine elektromagnetische Dämpfungsvorrichtung in axialer Richtung gedämpft wird. Dazu wird ein am horizontallagerseitigen Ende des konventionell gelagerten, also reibungsbehafteten Tonarms angebrachtes, elektrisch leitendes Sichelelement durch das Magnetfeld zweier Permanentmagnete bewegt. Hierdurch werden horizontale Wirbelströme im Sichelelement erzeugt und ein dem äußeren Magnetfeld entgegengesetztes vertikales Magnetfeld induziert. Dieses entgegengesetzte Magnetfeld hemmt und dämpft die Bewegung des Sichelelements. Nachteilig hieran ist die Verwendung eines sichelförmigen Dämpfungselementes, welches die effektive Masse des Tonarm erhöht und selbst resonanzanfällig ist. Ebenfalls werden hierdurch keine Schwingungen des Tonarms in vertikaler Richtung gedämpft, die z.B. durch verwellte Schallplatten oder durch Tritt- und Körperschall angeregt werden.

Die US 4,570,253 beschreibt ein Tonarmsystem, dessen Tonarmrohr über ein scheibenförmiges Verbindungselement an zwei Fäden aufgehängt ist und vorwiegend in vertikaler Richtung durch eine viskose Flüssigkeit gedämpft wird. Dabei werden die Fäden an zwei unterschiedlichen Punkten des Tonarmchassis in der Nähe des Drehpunktes befestigt und mit dem scheibenförmigen Verbindungselement der Halterung verbunden. Dieses Verbindungselement taucht dabei in einen mit viskoser Flüssigkeit gefüllten Behälter ein. Diese Anordnung dient vor allem zur Reduktion des "Skating-Effektes", der durch die Kröpfung des Tonarms eine zusätzliche, störende Kraft erzeugt. Nachteilig ist jedoch, dass Kippungen und vertikale Schwingungen des Tonarms ausschließlich durch die viskose Flüssigkeit gedämpft werden. Auch störende horizontale Verschiebungen des Drehpunktes werden nur durch die viskosen Eigenschaften der Flüssigkeit gedämpft und entsprechend der verwendeten Viskosität stabilisiert. Eine Änderung der Dämpfungseigenschaften ist nur mittels eines zeitaufwendigen Austausches der Dämpfungsflüssigkeit mit abweichender Viskosität möglich.

Als nächstliegender Stand der Technik beschreibt die DE 30 02 013 C2 eine Fadenlagerung im Drehpunkt einer um die vertikale Achse drehbaren Tonarmrohraufnahme, die durch zylindrische, in vertikaler Richtung mit entgegengesetzter Polarität angeordnete Dauermagneten ausschließlich axial stabilisiert wird und ein Drehlager ausschließlich für die Horizontalbewegung des Tonarms bildet. Der Abstand zwischen den Dauermagneten, die oberhalb des Tonarms liegen und dadurch auch das Gewicht der Tonarmrohraufnahme mit dem Tonarmrohr, des Gegengewichts sowie des Tonabnehmersystems tragen müssen, wird durch eine unterhalb des Tonarms befestigte Zugsehne bestimmt. Dabei werden die Dauermagneten durch eine vertikale rohrförmige Führung eingefasst, wobei der obere Dauermagnet fest mit dem Tonarmchassis verbunden ist. Die Zugsehne ist mit dem Tonarmchassis und der Tonarmrohraufnahme verbunden und bestimmt den Abstand der sich anziehenden Magneten. Das Tonarmrohr ist über ein Kugel-, Spitzoder Schneidlager an die Tonarmrohraufnahme gekoppelt. Nachteilig ist hierbei, dass der Tonarm mit der Tonarmrohraufnahme durch ein herkömmliches mechanisches Drehlager verbunden wird, die Vertikalbewegung des Tonarmrohrs also nach wie vor reibungsbehaftet ist. Die Anordnung dient vor allem der Kompensation des "Skating-Effektes". Die Dauermagneten in Verbindung mit der rohrförmigen Führung erfüllen eine stabilisierende Wirkung ausschließlich in axialer Richtung. In vertikaler Richtung ist keine Dämpfung und Stabilisierung des Tonarms möglich.

Ausgehend von diesem Stand der Technik ist es Aufgabe der vorliegenden Erfindung, einen Tonarmsystem mit äußerst geringer Lagerreibung und variabler Dämpfung bezogen auf alle drei Raumebenen zur Verfügung zu stellen, dessen Lager eine hohe Stoßunempfindlichkeit aufweist.

Gelöst wird diese Aufgabe durch die Merkmale des Anspruchs 1.

Erfindungsgemäß ist danach vorgesehen, dass ein Torsionselement, hier ein hochrelßfester, nicht-elastischer Faden, insbesondere ein Multifilament, kongruent zur vertikalen Drehachse und durch den horizontalen Drehpunkt der Aufnahme des Tonarmrohrs verläuft, wobei der untere Teil des Torsionselements durch einen mit der Tonarmrohraufnahme verbundenen Dauermagneten eingefasst ist und der obere Teil des Torsionselements am oberen Tonarmchassis befestigt ist. Alternativ kann das Torsionselement aus einem Stahldraht, einer Kohlefaserstab oder einem vergleichbarem Material geringer Reckung bestehen.

Tonarmsystem, bestehend aus Tonarmchassis, Tonarmrohr und Aufhängung wird mitunter auch unter dem Begriff Tonarm zusammengefasst. Tonarm und Tonarmsystem ist im Sinne dieser Erfindung gleichzusetzen.

Tonarmrohr bedeutet im Sinne der Erfindung jede Form eines Tonarmes. Insbesondere bedeutet im Sinne der Erfindung, dass nicht nur ein Tonarm mit einer zentralen Bohrung in Längsrichtung des Tonarms vorgesehen ist, sondern auch ein Tonarm mit einer exzentrischen Ausfräsung in Längsrichtung z.B. an der Unterseite des Tonarms vorgesehen ist und damit die zentrale Bohrung überflüssig wird. Ebenfalls umfasst der Begriff Tonarmrohr im Sinne der Erfindung einen Tonarm ohne Ausfräsungen und/oder zentrale Bohrung in Längsrichtung.

Die vertikale Ausdehnung des oberen Dauermagneten als extrem starker, zylindrischer Dauermagnet, ist dabei geringer als der Durchmesser der Tonarmrohraufnahme, wobei die Unterseite des Dauermagneten mit der Unterseite der Tonarmrohraufnahme abschließt. Die Form der Unterseite des Dauermagneten kann frei gewählt werden, insbesondere wird eine planare, kugelsegmentförmige oder zylindersegmentförmige Form bevorzugt. Zur Aufnahme des Torsionselementes ist der Magnet in der Tonarmrohraufnahme mit einer zentrischen Führungsbohrung versehen, in welcher das Torsionselement spielfrei befestigt ist. Alternativ kann das Torsionselement durch eine zentrisch gebohrte Polrückschlussplatte aus einem hochpermeablen Material spielfrei geführt werden, wobei die Stärke der gebohrten Polrückschlussplatte so gewählt ist, dass genug Raum für eine Befestigung des Torsionselements, insbesondere eine Senkung zur Aufnahme des Knotens vorhanden ist. Die Dauermagnete bestehen aus permanent stark magnetisierenden Materiallen, wobei insbesondere Neodymium-Eisen-Bor-Verbindungen oder Samarium-Kobalt-Verbindungen oder einer Kombination hieraus bevorzugt sind.

Lotrecht unterhalb des Dauermagneten der Tonarmrohraufnahme ist ein zweiter Dauermagnet mit entgegengesetzter Polarität am unteren Tonarmchassis befestigt.

Erfindungsgemäß können mithin drei Freiheitsgrade der Bewegung durch das Torsionselement realisiert werden. Die Tonarmrohraufnahme und mit ihr das Tonarmrohr hängt an dem vertikalen Faden, welcher, um eine Horizontalbewegung des Armes zu gestatten, lediglich verdrillt werden muss. Bei einer Vertikalbewegung des Armes wird der Faden am unteren (tonarmrohrseitigen) Ende an der Austrittsstelle geknickt. Die Drehung des Tonarmrohres um seine Längsachse wird durch einen unterhalb des Faden-Knickpunktes (vertikalen Drehpunktes) liegenden Schwerpunkt der Einheit Tonarmrohr-Gegengewicht-Tonabnehmersystem verhindert. Bezogen auf die Längsachse des Tonarmrohrs ergibt sich damit stets ein stabiler Zustand.

Die hohe innere Dämpfung des Torsionselements bei spielfreier Kopplung des Torsionselements an das Tonarmchassis sowie die Tonarmrohraufnahme hemmt die Anregung des Tonarmchassis durch mechanische Schwingungen des Tonabnehmersystems stark. Die Länge des Torsionselements zwischen der Halterungsschraube und der oberen Öffnung der Befestigungsbohrung gewährleistet auch eine starke Unterdrückung der Übertragung von Trittschall vom Tonarmchassis auf das Tonarmrohr und damit das Tonabnehmersystem, d. h. parasitäre Schwingungen werden dem Originalsignal - entsprechend der Modulation der Plattenrille - nicht überlagert.

Die Lagerreibung ist mit der Torsionsreibung des Torsionselementes gleichzusetzen und liegt damit um den Faktor 10 - 1000 unter derjenigen herkömmlicher, in Tonabnehmern eingesetzter Lager, wie Einpunkt-Spitzen - , Schneiden - oder Kugellager.

Die Bewegung des Tonarmrohres wird durch die Induktion von Wirbelströmen in den die Magnete fassenden Aluminiumaufnahmen bezogen auf alle drei Freiheitsgrade gedämpft (Wirbelstrombremsenprinzip). Dies wird dadurch erreicht, dass jede Lageänderung des Tonarmrohres eine Veränderung der Feldliniengeometrie des die beiden Dauermagnete umgebenden Magnetfeldes zur Folge hat. Die dabei in den Aluminiumaufnahmen induzierten Wirbelströme werden mit zunehmender Geschwindigkeit des Tonarmrohres stärker - unabhängig davon, ob die Quelle der Schwingungen das Tonabnehmersystem oder das Laufwerk ist.

Die Dauermagnete im Tonarmrohr und im Tonarmchassis dienen zur Stabilisierung und Dämpfung des Tonarmrohrs in allen Raumrichtungen. Gleichzeitig hemmt das Torsionselement äußere mechanische Anregung des Tonarmrohrs, wie z. B. Tritt- oder Körperschall stark. Weiterhin ist der Abstand zwischen dem Dauermagneten im Tonarmrohr und dem darunter am Tonarmchassis angebrachten Dauermagneten einstellbar und ermöglicht dadurch die Einstellung der Steifigkeit dieses quasisteifen Lagers und auch das Maß der Dämpfung des Lagers.

Das Torsionselement verläuft durch eine vertikale Bohrung im Tonarmrohr, deren Durchmesser so gewählt ist, dass dem Torsionselement der zur Abtastung verwellter Schallplatten notwendige Freiheitswinkel zur Verfügung steht, d.h. das Torsionselement berührt beim Abtasten verwellter Schallplatten zu keinem Zeitpunkt den Rand der Bohrung. Mit dem Tonarm ist ein exzentrisch gebohrtes Gegengewicht verbunden ist, wobei dessen Schwerpunkt unterhalb der oberen Öffnung der Führungsbohrung liegt.

Diese Bohrung, effektiv ein Sackloch, kann mit Silikonöl gefüllt werden. Dies hat den Vorteil, dass damit das Torsionselement auf ca. einem Drittel seiner effektiven Länge durch ein Silikonölbad läuft und somit die Übertragung von Schwingungen vom Tonarmchassis über das Torsionselement auf das Tonarmrohr zusätzlich dämpft. Durch die Dimensionierung dieser "Ölwanne" sowie die Verwendung eines Silikonöls geeigneter Viskosität ist eine Überdämpfung der Tonarm-Tonabnehmerresonanz ausgeschlossen. Da das Torsionselement vertikal durch die "Ölwanne" geführt wird, hat das Silikonöl eine zu vernachlässigende Dämpfungswirkung auf die Horizontalbewegung des Tonarmrohrs.

Optional kann das Tonarmrohr und die Tomarmhalterung einstückig aus Holz gefertigt werden oder aus mehreren Hölzern verbunden werden, wobei die Hölzer die Eigenschaft einer hohen Biegefestigkeit bei gleichzeitiger hoher innerer Dämpfung aufweisen sollten; hierzu eignen sich insbesondere Ebenholz, Palisander, Akazie und Bambus. Diese werden zur Aufnahme des Tonarmkabels mit einer, bezogen auf die Längsachse des Tonarmrohrs, Zentrumsbohrung versehen, deren Durchmesser gerade groß genug ist, um das verwendete Kabel aufzunehmen. Der an das verwendete Kabel angepasste, möglichst geringe, Innendurchmesser des Tonarmrohrs verhindert Mikrophonieeffekte, sowie die Anregung der im Tonarmrohr eingeschlossenen Luftsäule zu Eigenschwingungen (Orgelpfeifenprinzip).

Weitere vorteilhafte Maßnahmen sind in den übrigen Unteransprüchen beschrieben; die Erfindung wird anhand eines Ausführungsbeispiels und der nachfolgenden Figuren beschrieben, es zeigt:
- **Figur 1**: schematische Darstellung des gesamten Tonarmsystems;
- **Figur 2**: Querschnittsansicht der Tonarmrohraufnahme und des Tonarmchassis;
- **Figur 3**: Querschnittsansicht der Tonarmrohraufnahme mit alternativer Aufhängung.

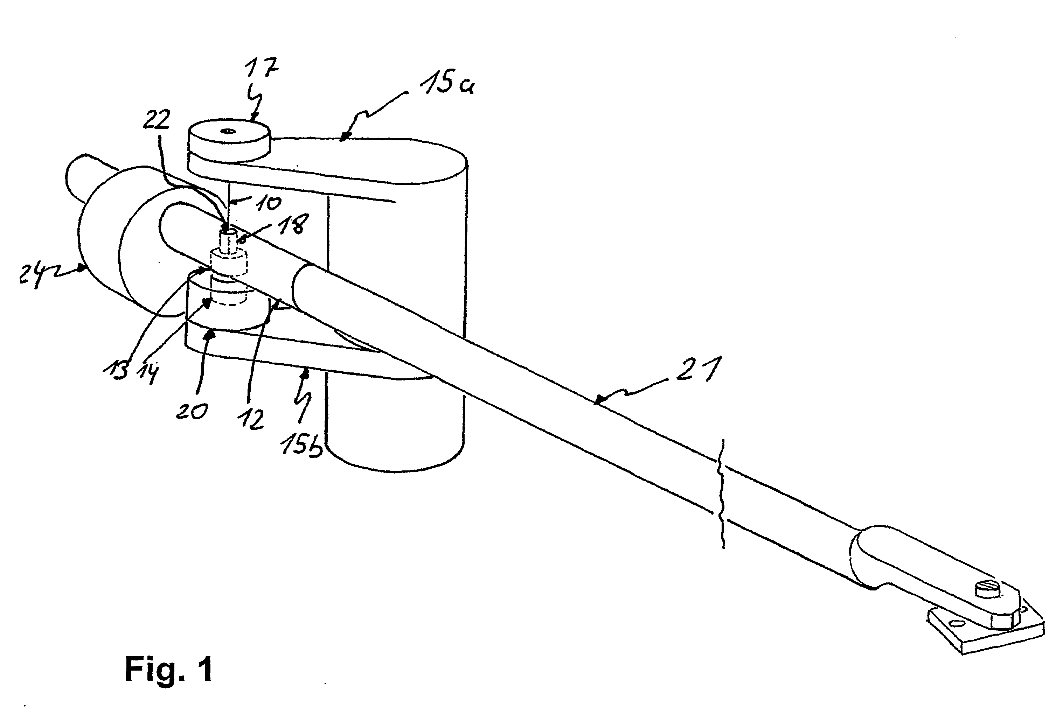

Die Fig. 1 zeigt eine schematische Seitenansicht der gesamten Tonarmsystems. In der Tonarmrohraufnahme 12 ist in der vertikalen Drehachse eine Sackbohrung 18 vorhanden, durch die das Torsionselement 10 läuft. An die Bohrung 18 schließt sich eine Bohrung 22 an, die allerdings in dem Dauermagneten 13 verläuft, aber einen wesentlich geringeren Durchmesser als die Bohrung 18 aufweist. In die Bohrung 18 kann ganz oder nur zum Teil Silikonöl zur Dämpfung von Eigenschwingungen des Torsionselementes eingefüllt werden; der Durchmesser der Bohrung 22 ist so gehalten, dass das Silikonöl aufgrund seiner Viskosität nicht durchfließt.

Das Torsionselement 10 wird an seinem unteren Ende zentrisch sowie spielfrei von einem mit einer entsprechenden Bohrung 22 versehenen Dauermagneten 13 gefasst und durch einen Knoten 23 gehalten oder aber eingeklebt oder durch einen Splint fixiert. Zwischen dem in der Tonarmrohraufnahme 12 gefassten Dauermagneten 13 und dem fest mit dem unteren Ausleger des Tonarmchassis 15b verbundenen Dauermagneten 14 befindet sich ein Spalt. Eine Abstandsänderung bewirkt eine Veränderung der Feldliniendichte in dem die Magnete umgebenden Magnetfeld und damit eine Veränderung der Dämpfung.

Die den unteren Dauermagneten 14 fassende Aluminiumaufnahme 20 ist mittels der Zylinderkopfschraube 19 (nicht gezeigt) mit dem unteren Ausleger des Tonarmchassis 15b verschraubt.

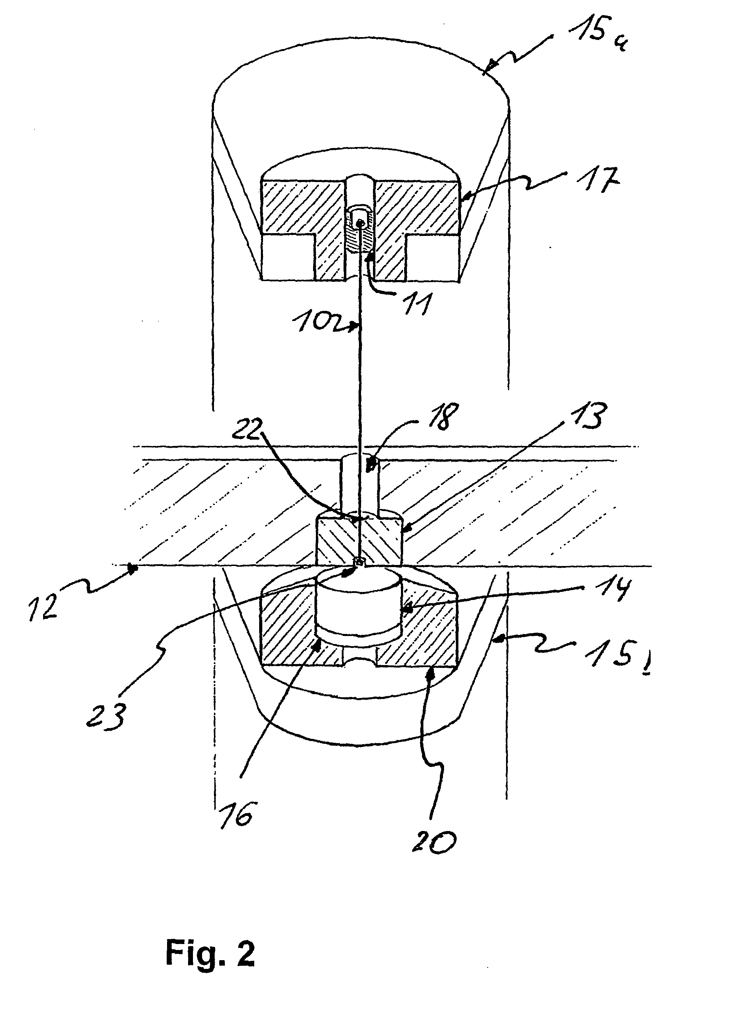

In der Fig. 2 ist die entsprechende Aufhängung der Tonarmrohraufnahme und des Tonarmchassis entlang des Tonarmrohrs gezeigt. Das Torsionselement 10 wird an seinem oberen Ende durch eine zentrisch gebohrte Halterungsschraube 11 (nicht gezeigt) gehalten, weiche ihrerseits in einer Stufenscheibe 17 läuft. Die Stufenscheibe 17 sitzt spielfrei drehbar in einer Bohrung des oberen Auslegers des Tonarmchassis 15a.

Eine Polrückschlussplatte 16 aus einem hochpermeablen Material bewirkt eine "unterseitige" magnetische Abschirmung bei gleichzeitiger Erhöhung der Feldliniendichte im Spalt zwischen den beiden Dauermagneten 13 u. 14 sowie in der unteren Aluminiumaufnahme 20. Die Feldliniendichte läßt sich welter erhöhen, in dem man den unteren Dauermagneten (14) mit einem "Topf" aus einem hochpermeablen Material versieht. Der Magnet muß jedoch perfekt zentrisch in diesem Topf sitzen, da jede Asymmetrie der Feldlinienverteilung im "Lager" eine über den nutzbaren Schallplattenradius ungleichmäßige Auflagekraft bezogen auf die Nadelspitze des Tonabnehmersystems zur Folge hat.

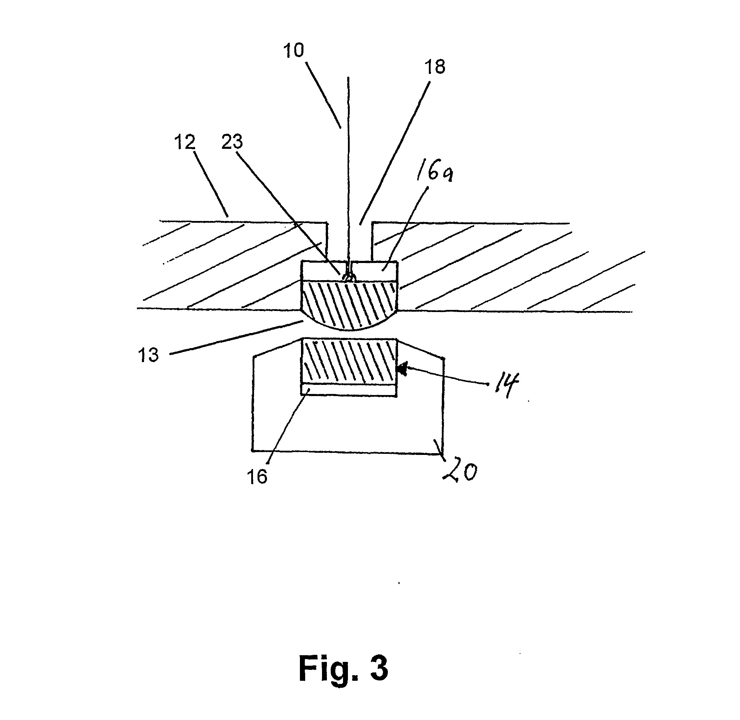

In der Fig. 3 ist eine alternative Form der Aufhängung in einer Querschnittsansicht gezeigt. In der Tonarmrohraufnahme 12 ist in der vertikalen Drehachse eine Sackbohrung 18 vorhanden, durch die das Torsionselement 10 läuft. An die Bohrung 18 schließt sich eine gebohrte Polrückschlussplatte 16a an, wobei die gebohrte Pohlrückschlussplatte 16a oberhalb des Dauermagneten 13 angebracht ist. An der Unterseite der gebohrten Polrückschlussplatte 16a befindet sich eine Senke, in der das Torsionselement 10 befestigt, insbesondere geknotet oder geklebt, wird. Diese Form der Aufhängung macht eine Bohrung des Dauermagneten 13 überflüssig. Weiterhin ist in der Fig. 3 eine alternative Form der Unterseite des Dauermagneten 13 gezeigt. Im Gegensatz zur planaren Unterseite wie in der Fig. 1 und Fig. 2 ist in der Fig. 3 eine kugelsegmentförmige Ausgestaltung der Unterseite des Dauermagneten 13 dargestellt.

### Bezugszeichenliste

- 10: Torsionselement
- 11: Halterungsschraube
- 12: Tonarmrohraufnahme
- 13: Dauermagnet in der Tonarmrohraufnahme
- 14: Dauermagnet im Tonarmchassis
- 15.a: Oberer Ausleger des Tonarmchassis
- 15.b: Unterer Ausleger des Tonarmchassis
- 16: Polrückschlussplatte
- 16a: gebohrte Polrückschlussplatte
- 17: Stufenscheibe
- 18: Tonarmbohrung
- 19: Zylinderkopfschraube
- 20: Aluminiumaufnahme für den unteren Dauermagneten
- 21: Tonarmrohr
- 22: Führungsbohrung
- 23: Torsionselementhalterung
- 24: Exzentrisch gelagertes Gegengewicht

## Patentansprüche

1. Tonarmsystem zur Schallplattenwiedergabe bestehend aus einem Tonarmchassis und einem Tonarmrohr, wobei eine Torsionselementaufhängung des Tonarmrohrs durch zylindrische, in vertikaler Richtung mit entgegengesetzter Polarität angeordnete Dauermagneten axial stabilisiert wird und ein Drehlager bildet, **dadurch gekennzeichnet, dass**
• ein Torsionselement (10) kongruent zur vertikalen Drehachse und durch den horizontalen Drehpunkt der Tonarmrohraufnahme (12) verläuft, wobei der untere Teil des Torsionselements (10) durch ein mit der Tonarmrohraufnahme (12) verbundenen Dauermagneten (13) eingefasst ist und der obere Teil des Torsionselements (10) am oberen Tonarmchassis (15a) befestigt ist; und
• lotrecht unterhalb des Dauermagneten (13) ein zweiter Dauermagnet (14) mit entgegengesetzter Polarität am unteren Tonarmchassis (16b) befestigt ist.

2. Tonarmsystem nach Anspruch 1, **dadurch gekennzeichnet, dass** das Torsionselement (10) ein hochreißfester, nicht-elastischer Faden, insbesondere ein Multifilament mit hoher innerer Dämpfung ist.

3. Tonarmsystem nach Anspruch 1, **dadurch gekennzeichnet, dass** das Torsionselement (10) aus einem Stahldraht, einem Kohlefaserstab oder einem vergleichbarem Material geringer Reckung besteht.

4. Tonarmsystem nach wenigstens einem der Ansprüche 1 bis 3, **dadurch gekennzeichnet, dass** die vertikale Ausdehnung des Dauermagneten (13) geringer als der Durchmesser des Tonarmrohrs (21) ist.

5. Tonarmsystem nach Anspruch 4, **dadurch gekennzeichnet, dass** die Unterseite des Dauermagneten (13) mit der Unterseite der Tonarmrohraufnahme (12) abschließt.

6. Tonarmsystem nach Anspruch 4 oder 5, **dadurch gekennzeichnet, dass** die Form der Unterseite des Dauermagneten (13) als planare, kugelsegmentförmige oder zylindersegmentförmige Form bevorzugt ist.

7. Tonarmsystem nach einem oder mehreren der vorhergehenden Ansprüchen, **dadurch gekennzeichnet, dass** das Torsionselement (10) durch eine vertikale Tonarmbohrung (18) in der Tonarmrohraufnahme (12) oberhalb des Dauermagneten (13) verläuft.

8. Tonarmsystem nach Anspruch 7, **dadurch gekennzeichnet, dass** die Tonarmbohrung (18) ganz oder teilweise mit Silikonöl gefüllt ist.

9. Tonarmsystem nach einem oder mehreren der vorhergehenden Ansprüche 1 bis 8, **dadurch gekennzeichnet, dass** das Torsionselement (10) durch eine zentrische Bohrung (22) innerhalb des Dauermagneten (13) spielfrei gefasst ist.

10. Tonarmsystem nach einem oder mehreren der Ansprüche 7 bis 9, **dadurch gekennzeichnet, dass** der Durchmesser der Bohrung (22) innerhalb der Dauermagnete (13) kleiner ist als derjenige der Tonarmbohrung (18), insbesondere so gewählt ist, dass ein Durchfließen des Silikonöls nicht möglich ist.

11. Tonarmsystem nach einem oder mehreren der vorhergehenden Ansprüche 1 bis 8, **dadurch gekennzeichnet, dass** das Torsionselement (10) durch eine zentrisch gebohrte Polrückschlussplatte (16a) aus einem hochpermeablen Material spielfrei geführt wird, wobei die Stärke der gebohrten Polrückschlussplatte (16a) so gewählt ist, dass genug Raum für eine Befestigung des Torsionselements (10), insbesondere eine Senkung zur Aufnahme eines Knotens (23) vorhanden ist.

12. Tonarmsystem nach einem oder mehreren der vorhergehenden Ansprüche, **dadurch gekennzeichnet, dass** unterhalb der zentrischen Bohrung (22) das Torsionselement (10) durch einen Knoten oder einen Splint (23) fixiert ist.

13. Tonarmsystem nach einem oder mehreren der vorhergehenden Ansprüche, **dadurch gekennzeichnet, dass** die Dauermagnete (13, 14) zur Stabilisierung des Tonarmrohrs (20) in axialer, radialer und vertikaler Richtung dienen.

14. Tonarmsystem nach einem oder mehreren der vorhergehenden Ansprüche, **dadurch gekennzeichnet, dass** der Abstand und damit die Magnetfeldstärke zwischen dem Dauermagneten (13) der Tonarmrohraufnahme (12) und dem Dauermagneten (14) des unteren Tonarmchassis (15b) frei wählbar ist.

15. Tonarmsystem nach einem oder mehreren der vorhergehenden Ansprüche, **dadurch gekennzeichnet, dass** der Dauermagnet (14) in einer aus nichtmagnetisierbarem, elektrisch-leitendem Material, insbesondere Aluminium, bestehenden Aufnahme (20) gehalten ist.

16. Tonarmsystem nach einem oder mehreren der vorhergehenden Ansprüche, **dadurch gekennzeichnet, dass** mit dem Tonarmrohr (21) ein exzentrisch gebohrtes Gegengewicht (24) verbunden ist, wobei dessen Schwerpunkt unterhalb der oberen Öffnung der Führungsbohrung (22) liegt.

17. Tonarmsystem nach einem oder mehreren der vorhergehenden Ansprüche, **dadurch gekennzeichnet, dass** die Tonarmrohraufnahme (12) aus nichtmagnetisierbarem, elektrisch-leitendem Material, insbesondere Aluminium besteht.

18. Tonarmsystem nach einem oder mehreren der vorhergehenden Ansprüche, **dadurch gekennzeichnet, dass** das Tonarmrohr (21) aus einem Holz mit hoher Biegefestigkeit bei gleichzeitiger hoher innerer Dämpfung gefertigt ist.

19. Tonarmsystem nach Anspruch 18, **dadurch gekennzeichnet, dass** das Tonarmrohr (21) und die Tonarmrohraufnahme (12) einstückig aus Holz gefertigt ist.

20. Tonarmsystem nach den Ansprüchen 18 oder 19, **dadurch gekennzeichnet, dass** das Holz ausgewählt ist aus Ebenholz, Palisander, Akazie oder Bambus.

21. Tonarmsystem nach einem oder mehreren der vorhergehenden Ansprüche 1 bis 20, **dadurch gekennzeichnet, dass** die Dauermagnete (13,14) aus permanent stark magnetisierenden Materialien bestehen.

22. Tonarmsystem nach Anspruch 21, **dadurch gekennzeichnet, dass** die permanent stark magnetisierenden Materialien Neodymium-Eisen-Bor-Verbindungen oder Samarium-Kobalt-Verbindungen oder einer Kombination derselben enthalten.

## Claims

1. A pick-up arm system for the replay of LPs comprising a pick-up arm chassis and a pick-up arm tube, whereby a torsion element suspension of the pick-up armtube is axially stabilized by cylindrical magnets of opposing polarity, forming a pivotable bearing, **characterized by**:
• a torsion element (10) running congruently to the vertical axis of rotation and through the horizontal pivot of the pick-up arm receiving element(12), the lower end of the torsion element(10) set into a permanent magnet(13), which itself is set into the pick-up arm receiving element(12) and the upper end of the torsion element(10) being attached to the upper extension of the pick-up arm chassis(15a); and
• perpendicular below the permanent magnet(13), a second permanent magnet(14) of opposing polarity being attached to the lower extension of the pick-up arm chassis(15b).

2. A pick-up arm system as set forth in claim 1, wherein said torsion element (10) comprises a high tensile strength, non-elastic thread, particularly a multifilament of high internal damping.

3. A pick-up arm system as set forth in claim 1, wherein said torsion element (10) consists of a steel wire, a carbon fibre stick or a comparable material of minimal stretch.

4. A pick-up arm system as set forth in one of claims 1 - 3, wherein the vertical extension of permanent magnet (13) is less than the diameter of the pick-up armtube (21).

5. A pick-up arm system as set forth in claim 4, wherein the bottom side of permanent magnet (13) is flush with the bottom of the pick-up arm receiving element.

6. A pick-up arm system as set forth in claims 4 or 5, wherein the shape of the bottom side of said permanent magnet (13) is preferably planar, sphere segment shaped or cylinder segment shaped.

7. A pick-up arm system as set forth in any or all of the preceding claims, wherein the torsion element (10) extends through a vertical bore (18) in the pick-up arm receiving element (12) situated above permanent magnet (13).

8. A pick-up arm system as set forth in claim 7, wherein said vertical bore (18) is entirely or partially filled with silicon oil.

9. A pick-up arm system as set forth in one or several of the preceding claims 1-8, wherein the torsion element (10) is fixated without play by an axial hole (22) in permanent magnet (13).

10. A pick-up arm system as set forth in claims 7 -9, wherein said axial hole(22) in the permanent magnet(13) has a diameter smaller than that of the vertical bore(18), deliberately chosen to exclude any leakage of silicon oil.

11. A pick-up arm system as set forth in one or several of the preceding claims 1-8, wherein the torsion element (10) is, without play, led out of a centrally drilled pole plate (16a), whereby the thickness of the pole plate is chosen to provide enough room for a fixation of the torsion element (10), particularly a countersunk bore to accommodate a knot (23).

12. A pick-up arm system as set forth in one or several of the preceding claims, wherein the torsion element (10) is fixated by a knot or cotter pin (23) below an axial hole (22).

13. A pick-up arm system as set forth in one or several of the preceding claims, wherein the permanent magnets (13, 14) stabilize said arm tube (20) axially, radially and vertically.

14. A pick-up arm system as set forth in one or several of the preceding claims, wherein the distance between the permanent magnet (13) in the pick-up arm receiving element(12) and the permanent magnet(14) in the lower extension of the pick-up arm chassis(15b) and therefore the fluxline density is adjustable.

15. A pick-up arm system as set forth in one or several of the preceding claims, wherein the permanent magnet (14) is set into a non-magnetic, electrically conductive material, particularly Aluminium, housing (20).

16. A pick-up arm system as set forth in one or several of the preceding claims, wherein the pick-up arm tube(21) is connected to an eccentrically bored counterweight(24), whereby it's center of gravity is located below the upper opening of the axial guiding hole(22).

17. A pick-up arm system as set forth in one or several of the preceding claims, wherein the pick-up arm receiving element(12) is made out of an non-magnetic, electrically conductive material, particularly Aluminium.

18. A pick-up arm system as set forth in one or several of the preceding claims, wherein the pick-up arm tube (21) is made out of wood, said wood having a high bending strength and high internal damping.

19. A pick-up arm system as set forth in claim 18, wherein the pick-up arm tube (21) and the pick-up arm receiving element (12) are fabricated from a single piece of wood.

20. A pick-up arm system as set forth in claims 18 or 19 wherein said wood comprises of ebony, jacaranda, acacia, bamboo.

21. A pick-up arm system as set forth in one or several of the preceding claims 1 - 20, wherein the permanent magnets (13, 14) consist of strong magnetic materials or alloys.

22. A pick-up arm system as set forth in claim 21, wherein the strong magnetic alloys comprise of either or a combination of Neodymium-Iron Boron and Samarium-Cobalt alloys.

## Revendications

1. Système de bras de lecture de disque (*vinyle*), constitué d'un châssis et d'un corps tubulaire équipé d'un porte-élément de torsion tenant lieu de coussinet de pivotement et verticalement équilibré dans l'axe par des aimants permanents cylindriques de polarité contraire, **se caractérisant :**
- **par** un élément de torsion (10) qui, congruent à l'axe vertical de rotation, passe par le centre de rotation horizontale de la tête de lecture (12), l'extrémité de cet élément de torsion (10) étant cerclée par un aimant permanent (13) connecté à la cellule (12) et la partie supérieure (10), fixée sur le montant supérieur du châssis du bras de lecture (15 a),
- et par un second aimant permanent (14) de polarité contraire, monté perpendiculairement au premier aimant permanent (13) et fixé sur l'extrémité du châssis du bras de lecture (15b).

2. Système de bras de lecture se caractérisant conformément à la spécification 1, par un élément de torsion (10) constitué par un filament non-élastique hautement résistant à la rupture, plus précisément un multifilament, et très performant en amortissement interne.

3. Système de bras de lecture se caractérisant conformément à la spécification 1, par le fait que l'élément de torsion (10) soit constitué d'un fil d'acier ou d'une tige en fibres de carbone ou encore d'un autre matériau équivalent et aussi faiblement étirable.

4. Système de bras de lecture se caractérisant conformément au moins à une des spécifications de 1 à 3, par un étirement vertical de l'aimant permanent (13), inférieur au diamètre du corps tubulaire du bras de lecture (21).

5. Système de bras de lecture se caractérisant conformément à la spécification 4, par le fait que la partie inférieure de l'aimant permanent (13) vienne s'ajuster sur celle de la tête de lecture (12).

6. Système de bras de lecture se caractérisant conformément aux spécifications 4 ou 5, par le fait que l'on privilégie pour la configuration de la partie inférieure de l'aimant permanent (13), une géométrie de segment sphérique ou cylindré, plane.

7. Système de bras de lecture se caractérisant conformément à une ou à plusieurs des spécifications précédentes, par la transition de l'élément de torsion (10) à travers une forure verticale (18) du bras de lecture (12) au-dessus de l'aimant permanent (13).

8. Système de bras de lecture se caractérisant conformément à la spécification 7, par l'emplissage complet ou partiel de la forure du bras de lecture (18) avec de l'huile de silicone.

9. Système de bras de lecture se caractérisant conformément à une ou à plusieurs des spécifications de 1 à 8 précédentes, par le fait que grâce à une forure centrique (22), l'élément de torsion (10) soit fixé sans jeu à l'intérieur de l'aimant permanent (13).

10. Système de bras de lecture se caractérisant conformément aux spécifications de 7 à 9, par un diamètre de forure (22) des aimants permanents (13), inférieur à celui du bras de lecture (18), ceci notamment afin de prévenir toute infiltration d'huile de silicone.

11. Système de bras de lecture se caractérisant conformément à une ou à plusieurs des spécifications de 1 à 8 précédentes, par le fait que l'élément de torsion (10) transite sans jeu par une joue de reflux magnétique (16a) percée au centre et conçue dans un matériau d'une grande perméabilité, l'épaisseur de cette joue de reflux magnétique perforée (16a) ayant été spécifiquement étudiée pour être à même de garantir un espace suffisant à la fixation de l'élément de torsion (10) et plus précisément, un logement au noeud de fixation (23).

12. Système de bras de lecture se caractérisant conformément à une ou à plusieurs des spécifications précédentes, par la fixation de l'élément de torsion (10) au bas d'une forure centrique (22) par l'intermédiaire d'un noeud ou d'une goupille (23).

13. Système de bras de lecture se caractérisant conformément à une ou à plusieurs des spécifications précédentes, par le fait que la stabilisation axiale, radiale et verticale du corps tubulaire du bras de lecture (20), soit assurée par les aimants permanents (13, 14).

14. Système de bras de lecture se caractérisant conformément à une ou à plusieurs des spécifications précédentes, par ce que la distance et, de ce fait, la puissance du champ magnétique entre l'aimant permanent (13) de la cellule (12) et celui (14) de l'extrémité du châssis du bras de lecture (15 b), soit librement définissable.

15. Système de bras de lecture se caractérisant conformément à une ou à plusieurs des spécifications précédentes, par le fait que l'aimant permanent (14) soit maintenu dans un logement (20) fabriqué dans un matériau électroconducteur, non magnétisable, comme notamment l'aluminium.

16. Système de bras de lecture se caractérisant conformément à une ou à plusieurs des spécifications précédentes, par le fait que le corps tubulaire du bras de lecture (21) soit relié à un contre-poids alésé excentriquement (24), le centre de gravité de ce dernier se situant au-dessous du bord supérieur de l'alésage (22).

17. Système de bras de lecture se caractérisant conformément à une ou à plusieurs des spécifications précédentes, par une cellule (12) construite dans un matériau électroconducteur, non magnétisable, comme notamment l'aluminium.

18. Système de bras de lecture se caractérisant conformément à une ou à plusieurs des revendications précédentes, par un bras de lecture (21) au corps tubulaire conçu dans un bois conjuguant une haute résistance à la flexion avec de grandes propriétés d'amortissement interne.

19. Système de bras de lecture qui se caractérise conformément à la spécification 18, par le fait que le corps tubulaire du bras de lecture (21) et la cellule (12) soient tous les deux fabriqués en bois et d'une seule pièce.

20. Système de bras de lecture qui se caractérise conformément aux spécifications 18 ou 19, par le choix de la qualité du bois usiné : Ebène, palissandre, acacia ou bambou.

21. Système de bras de lecture se caractérisant conformément à une ou à plusieurs des spécifications de 1 à 20 précédentes, par les aimants permanents (13, 14) en matériaux fortement magnétisants.

22. Système de bras de lecture se caractérisant conformément à la spécification 21, par le fait que les matériaux fortement magnétisants permanents renferment des alliages de néodyme-fer-bore ou de samarium-cobalt ou encore des alliages combinant ces mêmes composants.
